**Europäisches Patentamt**

**European Patent Office**

**Office européen des brevets**

(19)

(11) Numéro de publication : **0 493 163 A2**

# (12) DEMANDE DE BREVET EUROPEEN

(21) Numéro de dépôt : **91403325.3**

(22) Date de dépôt : **09.12.91**

(51) Int. Cl.⁵ : **F16D 3/64, F16C 7/04**

(30) Priorité : **28.12.90 FR 9016501**

(43) Date de publication de la demande :
**01.07.92 Bulletin 92/27**

(84) Etats contractants désignés :
**DE ES FR GB IT**

(71) Demandeur : **GLAENZER SPICER**
**10 Rue J.P. Timbaud**
**F-78301 Poissy (FR)**

(72) Inventeur : **Moulinet, François**
**39, rue des Temporets**
**F-78150 Triel Sur Seine (FR)**

(74) Mandataire : **Kohn, Philippe et al**
**c/o CABINET LAVOIX 2, place d'Estienne**
**d'Orves**
**F-75441 Paris Cédex 09 (FR)**

(54) **Dispositif à rigidité commandée pour la transmission mécanique d'efforts.**

(57)   L'invention propose un dispositif pour la transmission mécanique d'efforts entre un premier élément d'entrée, un second élément de sortie, caractérisé en ce qu'il comporte un organe d'entrée (12) relié au premier élément, un organe de sortie (14) relié au second élément et un bloc de transmission d'efforts (16) interposé entre ces deux organes (12, 14) et qui est susceptible de se déformer élastiquement sous l'action des efforts de compression qui lui sont appliqués par les deux organes lorsque ces derniers se déplacent l'un par rapport à l'autre selon la direction principale (X-X) de transmission des efforts, et en ce qu'il comporte des moyens commandés (24) pour faire varier la rigidité du bloc de transmission d'efforts (16) selon ladite direction principale (X-X) en lui appliquant un effort de commande (FC).
   Application à la transmission d'efforts ou de couples.

FIG.1

EP 0 493 163 A2

La présente invention concerne un dispositif pour la transmission mécanique d'efforts entre un élément d'entrée d'efforts et un élément de sortie d'efforts.

L'invention concerne plus particulièrement un dispositif de transmission d'efforts ou de couples du type dans lequel un bloc de transmission déformable élastiquement est interposé entre les deux éléments.

On connaît de nombreuses conceptions de tels dispositifs dans lesquels le bloc de transmission possède des caractéristiques intrinsèques qui sont constantes. C'est notamment le cas des silent-bloc, ou cales élastiques, et des accouplements élastiques dans lesquels le matériau du, ou des, blocs de transmission est par exemple un matériau élastomère.

De tels dispositifs sont des dispositifs passifs, c'est-à-dire que leur comportement en transmission d'efforts ne varie qu'en fonction de la valeur des efforts ou des couples qu'ils ont à transmettre.

La présente invention a pour but de proposer une conception d'un dispositif de transmission d'efforts qui soit actif, c'est-à-dire dont on puisse faire varier le comportement en transmission des efforts.

Dans ce but l'invention propose un dispositif pour la transmission mécanique d'efforts entre un premier élément d'entrée et un second élément de sortie, caractérisé en ce qu'il comporte un organe d'entrée relié au premier élément, un organe de sortie relié au second élément et un bloc de transmission interposé entre ces deux organes et susceptible de se déformer élastiquement sous l'action des efforts de compression qui lui sont appliqués par les deux organes lorsque ces derniers se déplacent l'un par rapport à l'autre selon la direction principale de transmission des efforts, et en ce qu'il comporte des moyens commandés pour faire varier la rigidité du bloc de transmission selon ladite direction principale en lui appliquant un effort de commande.

Selon d'autres caractéristiques de l'invention :
– l'effort de commande est appliqué au bloc de transmission selon une direction différente de ladite direction principale ;
– le bloc de transmission comporte deux faces d'extrémités planes et opposées qui coopèrent chacune respectivement avec l'organe d'entrée et l'organe de sortie, la direction de l'effort de commande étant sensiblement parallèle auxdites faces d'extrémité ;
– le bloc de transmission comporte au moins une couche centrale en matériau déformable élastiquement sur les faces opposées de laquelle sont fixées deux plaques d'extrémité rigides qui délimitent lesdites faces d'extrémité du bloc de transmission ;
– le bloc de transmission comporte un empilage de couches en matériau déformable élastiquement entre lesquelles sont agencées des plaques rigides ;
– chaque couche de matériau déformable élastiquement est une couche mince en matériau élastomère et chaque plaque rigide est une plaque métallique adhérisée au matériau élastomère ;
– les deux faces d'extrémité du bloc de transmission déformable élastiquement sont en butée contre deux surfaces de réaction du dispositif agencées en vis-à-vis, le dispositif comportant un organe d'application de l'effort de commande en forme de coin qui pénètre dans le bloc de transmission pour provoquer la mise en compression par effet de coincement des deux parties opposées du bloc de transmission dont chacune est délimitée d'une part par l'une des deux faces d'extrémité du bloc de transmission et, d'autre part, par la face correspondante inclinée de l'organe d'application de l'effort de commande ;
– les deux faces inclinées de l'organe d'application de l'effort de commande forment un même angle par rapport à la direction principale de transmission des efforts ;
– l'organe d'application de l'effort de commande est interposé entre deux plaques rigides du bloc de transmission.

Dans son application à la transmission d'un couple, le dispositif selon l'invention est caractérisé en ce que l'organe d'entrée et l'organe de sortie sont montés mobiles en rotation l'un par rapport à l'autre, en ce que chacun des deux organes comporte au moins une patte décalée radialement par rapport à l'axe commun de rotation et qui s'étend en regard de la patte correspondante de l'autre des deux organes, et en ce que au moins un bloc de transmission à rigidité commandée est agencé entre les deux faces en vis-à-vis des deux pattes associées.

Selon d'autres caractéristiques de l'invention :
– chacun des deux organes d'entrée et de sortie comporte une série de pattes réparties régulièrement autour de l'axe, les pattes de chacun des deux organes étant en nombre égal et alternées entre elles et des blocs de transmission étant agencés entre les faces en vis-à-vis de chacune des paires de pattes associées des deux organes ;
– l'organe d'application de l'effort de commande est un organe susceptible d'être déplacé axialement par rapport aux deux organes pour faire varier l'effort de commande et il comporte une série de coins dont chacun pénètre dans un bloc de transmission ; ou
– l'organe d'application de l'effort de commande comporte une pluratité de coins dont chacun pénètre radialement dans un bloc de transmission et des moyens pour déplacer simultanément les coins.

D'autres caractéristiques et avantages de l'invention apparaîtront à la lecture de la description détaillée qui va suivre pour la compréhension de laquelle on se reportera aux dessins annexés dans lesquels :

– La figure 1 est une vue en coupe d'une représentation schématique d'un exemple de réalisation d'un dispositif de transmission d'efforts selon l'invention ;

– les figures 2 et 3 sont des graphiques illustrant le fonctionnement et le comportement en transmission d'efforts du dispositif de la figure 1 ;

– la figure 4 est une vue en section selon la ligne 4-4 de la figure 5 d'une représentation schématique d'un exemple de réalisation d'un dispositif de transmission de couple conforme aux enseignements de l'invention ;

– la figure 5 est une vue en section selon la ligne 5-5 de la figure 4 ;

– la figure 6 est une vue en section selon la ligne 6-6 de la figure 5 ; et

– la figure 7 est une vue similaire à celle de la figure 6 illustrant une variante d'un détail de conception du dispositif représenté aux figures 4 à 6.

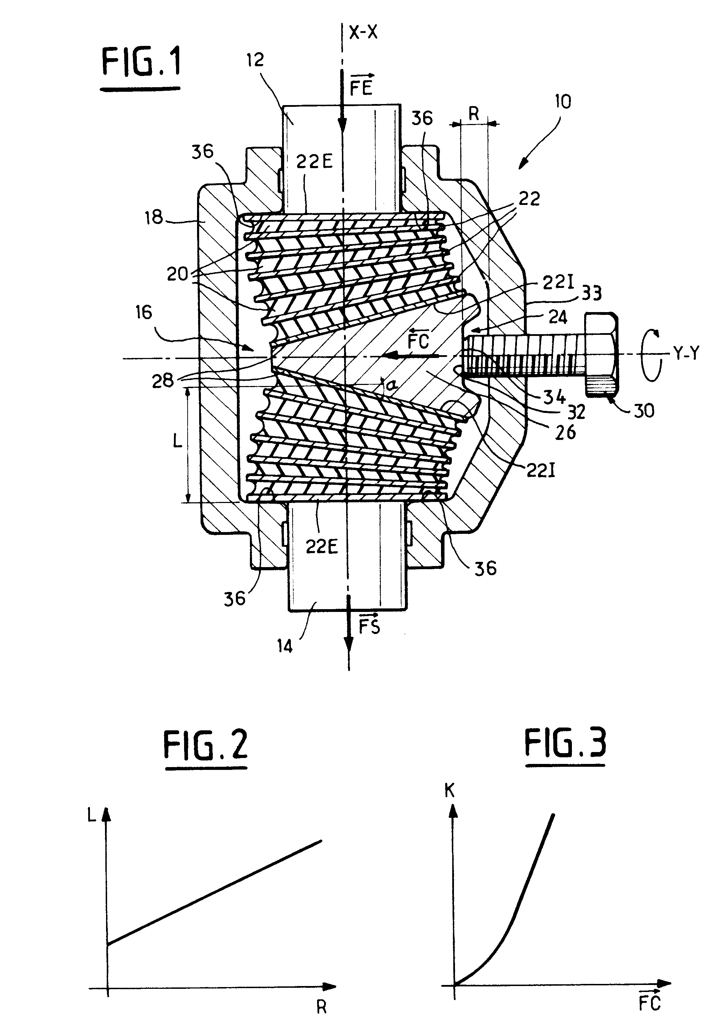

Le dispositif de transmission d'efforts 10 illustré à la figure 1 comporte un organe 12 d'entrée d'efforts et un organe 14 de sortie d'efforts auquel l'organe d'entrée 12 transmet l'effort d'entrée FE qui lui est appliqué, à travers un bloc de transmission d'efforts déformables élastiquement 16.

Les deux organes 12 et 14 sont alignés et montés coulissants selon leur direction commune X-X dans un boîtier 18 du dispositif 10.

Le dispositif 10 permet ainsi la transmission d'efforts selon la direction principale X-X du boîtier 18.

Le bloc de transmission d'efforts 16 est constitué de deux parties opposées et symétriques par rapport à un plan médian du boîtier perpendiculaire à la direction X-X et dont la trace Y-Y est visible sur la figure 1.

Chacune des deux parties, supérieure et inférieure en considérant la figure 1, est constituée d'un empilage de minces tranches ou couches 20 de matériau déformable élastiquement et de plaque rigide 22.

Le matériau des couches 20 est par exemple un élastomère. Sur les faces parallèles opposées de chacune des couches 20 sont adhérisées les faces correspondantes des plaques 22 dont chacune est découpée dans un feuillard métallique.

La notion de parallélisme des faces s'entend à la déformation près due à l'organe de commande du dispositif comme cela sera expliqué plus avant.

Les couches déformables 20 sont de très faible épaisseur de manière à supporter des pressions élevées lorsqu'on leur applique des efforts de compression selon la direction X-X.

Conformément à l'invention, le dispositif 10 comporte un organe d'application d'un effort de commande FC au bloc de transmission d'efforts 16.

L'organe 24 comporte un coin 26 qui est interposé entre les faces libres en vis-à-vis des deux plaques rigides intérieures opposées 22I des deux parties du bloc de transmission d'efforts 16.

Les plaques 22I coopèrent avec les faces inclinées opposées 28 du coin de commande 26. Chaque face inclinée 28 forme un même angle "a" par rapport à la direction Y-Y.

Le coin de commande 26 est susceptible d'être déplacé selon la direction Y-Y d'application de l'effort de commande FC qui est perpendiculaire à la direction principale de transmission d'efforts X-X et sensiblement parallèle aux faces d'extrémités opposées du bloc de transmission d'efforts 16 constituées par les faces libres des deux plaques rigides extérieures 22E des deux parties du bloc de transmission d'efforts 16.

Les moyens de déplacement du coin 26, et donc d'application de l'effort de commande FC, sont schématisés sous la forme d'une vis de commande 30 dont le corps est monté vissé dans la paroi latérale 33 du boîtier 18 et dont l'extrémité libre 32 coopère avec une face plane 34 en vis-à-vis du coin 26.

La rotation de la vis dans l'un ou l'autre sens provoque la mise en compression plus ou moins élevée de chacune des deux parties du bloc de transmission 16 dont les faces d'extrémités opposées 22E sont en butée contre des surfaces de réaction opposées 36 de la paroi interne du boîtier 18.

Chaque position axiale du coin de commande 26 détermine pour l'ensemble du bloc de transmission 16 un état de précontrainte et donc une valeur de la rigidité du bloc de transmission 16 selon la direction X-X.

Grâce à la conception du bloc de transmission 16 par empilage de couches 20 et de plaques 22, il est possible d'obtenir une loi de variation non linéaire de la rigidité du bloc de transmission 16.

Si FC varie, le comportement du bloc de transmission 16 est illustré à la figure 2 sur laquelle on constate que la variation de la cote R (voir figure 1) provoque une variation sensiblement proportionnelle de la longueur L de chacune des deux parties du bloc selon la direction X-X (voir figure 1).

Le comportement en transmission d'efforts du dispositif 10 est illustré à la figure 3 sur laquelle on voit que la rigidité K du dispositif varie selon une loi non linéaire en fonction de la valeur de l'effort de commande FC .

En pilotant la valeur de l'effort de commande FC par tout moyen adapté, on obtient un pilotage de la rigidité du dispositif de transmission d'efforts 10 selon la direction X-X.

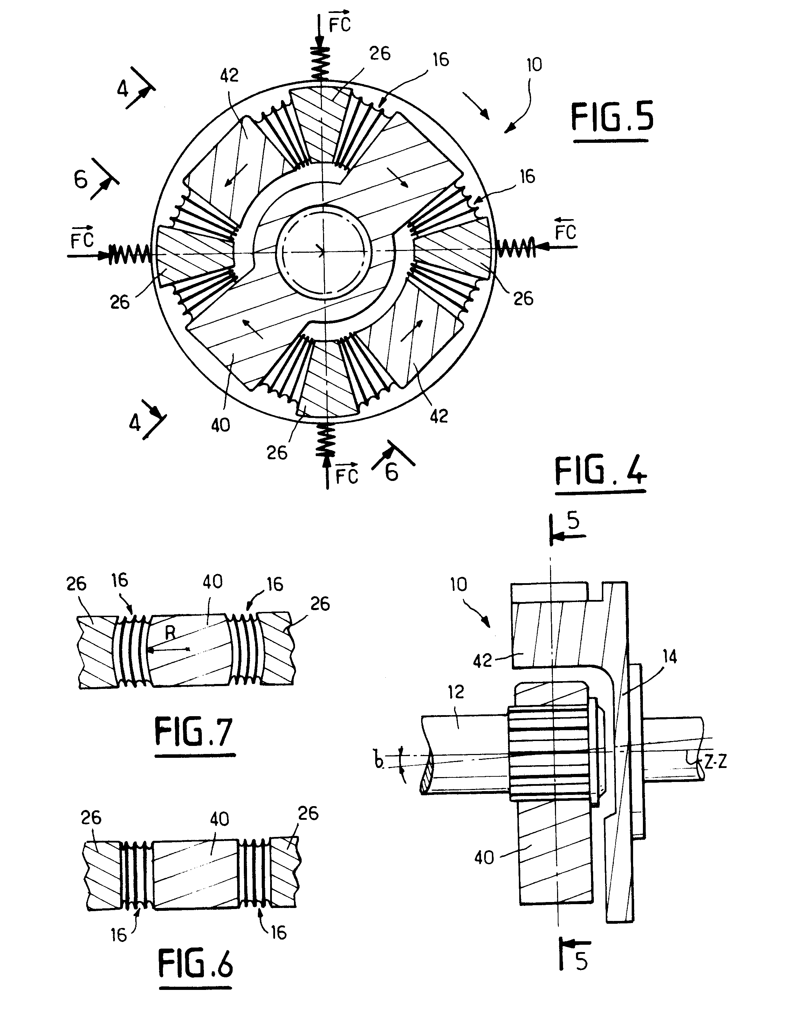

Le dispositif illustré aux figures 4 à 7 représente l'adaptation de blocs de transmission d'efforts à rigidité pilotée à la transmission de couples.

Les organes d'entrée 12 et de sortie 14 sont deux organes sensiblement coaxiaux d'axe commun Z-Z autour duquel il sont susceptibles de se déplacer en rotation l'un par rapport à l'autre.

L'organe d'entrée 12 comporte une série de pattes radiales 40, ici au nombre de deux, de même que l'organe de sortie 14 comporte des pattes de transmission 42 décalées radialement par rapport à l'axe Z-Z et qui s'étendent axialement entre les pattes de transmission 40.

Entre chaque paire formée par une patte radiale 40 et une patte axiale 42 associée, on trouve un bloc de transmission d'efforts 16 avec son coin de commande 26.

Les coins de commande 26 sont susceptibles d'être déplacés radialement, par exemple par un dispositif du type à mandrin (non représenté) de manière à appliquer un effort de commande FC à chacun des coins à déplacement radial 26.

Du fait de son agencement circulaire, le dispositif 10 est "bouclé" et il ne nécessite donc pas de boîtier, les surfaces de réaction 36 de la figure 1 étant remplacées dans leur fonction par les surfaces opposées en vis-à-vis des pattes 40 et 42.

La couronne extérieure d'un mandrin de commande des coins de commande 26 fait dans ce cas fonction de pièce de réaction pour l'application des efforts radiaux de commande FC, de la même manière que la paroi latérale 33 du boîtier sert de réaction à la vis 30.

Sur la variante de la figure 7, les surfaces de transmission des pattes sont légèrement convexes, par exemple sphériques, de même que les couches et plaques 20 et 22 pour permettre une légère mise sous angle "b" d'un organe par rapport à l'autre.

Cet effet d'articulation entre les deux organes 12 et 14 est obtenu pour deux paires de pattes en conférant le même profil convexe aux surfaces de transmission des pattes 40 et 42.

Il est également possible d'augmenter le nombre des pattes 40 et 42.

A titre de variante non représentée, il est bien entendu possible de déplacer les coins 26 selon une direction parallèle à l'axe Z-Z à l'aide d'un organe de commande commun aux blocs de transmission d'efforts 16, coaxial aux organes 12 et 14 et susceptible d'être déplacé axialement par rapport à l'un de ces deux organes.

Cet organe de commande à déplacement axial peut par exemple se présenter sous la forme d'un plateau mû axialement par un effort d'origine mécanique, hydraulique ou électromagnétique et dont une face radiale comporte les coins 26 qui s'étendent depuis cette face en direction des blocs de transmission d'efforts. La réaction à l'effort de commande FC est dans ce cas supportée par celui des deux organes 12 ou 14 qui porte l'organe de commande à déplacement axial.

Toute loi de pilotage de l'effort de commande FC peut être choisie en fonction des applications du dispositif et de la nature des moyens d'application disponibles pour produire cet effort de commande.

## Revendications

1. Dispositif pour la transmission mécanique d'efforts entre un premier élément d'entrée, un second élément de sortie, caractérisé en ce qu'il comporte un organe d'entrée (12) relié au premier élément, un organe de sortie (14) relié au second élément et un bloc de transmission d'efforts (16) interposé entre ces deux organes (12, 14) et qui est susceptible de se déformer élastiquement sous l'action des efforts de compression qui lui sont appliqués par les deux organes lorsque ces derniers se déplacent l'un par rapport à l'autre selon la direction principale (X-X) de transmission des efforts, et en ce qu'il comporte des moyens commandés (24) pour faire varier la rigidité du bloc de transmission d'efforts (16) selon ladite direction principale (X-X) en lui appliquant un effort de commande (FC).

2. Dispositif selon la revendication 1, caractérisé en ce que l'effort de commande (FC) est appliqué au bloc de transmission d'efforts (16) selon une direction (Y-Y) différente de ladite direction principale (X-X).

3. Dispositif selon la revendication 2, caractérisé en ce que le bloc de transmission d'efforts (16) comporte deux faces d'extrémités planes et opposées (22E) qui coopèrent chacune respectivement avec l'organe d'entrée (12) et l'organe de sortie (14), et en ce que la direction (Y-Y) de l'effort de commande est sensiblement parallèle auxdites faces d'extrémités (22E).

4. Dispositif selon la revendication 3, caractérisé en ce que le bloc de transmission d'efforts (16) comporte au moins une couche centrale (20) en matériau déformable élastiquement sur les faces opposées de laquelle sont fixées deux plaques d'extrémités rigides (22E) qui délimitent lesdites faces d'extrémités du bloc de transmission d'efforts (16).

5. Dispositif selon la revendication 4, caractérisé en ce que le bloc de transmission d'efforts (16) comporte un empilage de couches en matériau déformable élastiquement (20) entre lesquelles sont agencées des plaques rigides (22).

6. Dispositif selon l'une des revendications 4 ou 5, caractérisé en ce que chaque couche de matériau déformable élastiquement (20) est une couche mince de matériau élastomère, et en ce que chaque plaque rigide (22, 22E, 22I) est une plaque métallique adhérisée au matériau élastomère.

7. Dispositif selon l'une quelconque des revendications 3 à 6, caractérisée en ce que les deux faces d'extrémités (22E) du bloc de transmission sont en butée respectivement contre deux surfaces de réaction (36) du dispositif agencées en vis-à-vis, et en ce qu'il comporte un organe (26) d'application de l'effort de commande (FC) en forme de coin qui pénètre dans le bloc de transmission (16) pour provoquer la mise en compression par effet de coin des deux parties opposées du bloc de transmission d'efforts (16) dont chacune est délimitée d'une part par l'une des deux faces d'extrémités (22E) du bloc de transmission d'efforts (16) et, d'autre part, par la face correspondante inclinée (28) de l'organe d'application (26) de l'effort de commande (FC).

8. Dispositif selon la revendication 7, caractérisé en ce que les deux faces inclinées (28) de l'organe d'application de l'effort de commande (FC) forment un même angle (a) par rapport à la direction principale (X-X) de transmission des efforts.

9. Dispositif selon la revendication 8, prise en combinaison avec la revendication 5, caractérisé en ce que l'organe (26) d'application de l'effort de commande est interposé entre deux plaques rigides (22I) du bloc de transmission d'efforts (16).

# FIG.1

# FIG.2

# FIG.3

FIG.5

FIG.4

FIG.7

FIG.6